# EUROPEAN PATENT SPECIFICATION

(11) **EP 3 489 047 B1**
(45) Date of publication and mention of the grant of the patent: **22.04.2020**
(21) Application number: 18207608.3
(22) Date of filing: 21.11.2018
(51) Int. Cl.: B60G 9/00, B60G 11/27, B62D 61/12

(54) **AXLE LIFT**
ACHSLIFT
LEVÉE D'ESSIEU

(30) Priority: 21.11.2017 NL 2019948
(43) Date of publication of application: 29.05.2019
(73) Proprietor: VDL Weweler B.V., 7325 WC Apeldoorn (NL)
(72) Inventor: AALDERINK, Derk Geert, 7245 NV LAREN (NL)
(74) Representative: EP&C

(56) References cited:
- EP-A1- 0 431 673
- EP-A1- 0 941 915
- EP-A1- 1 661 739
- EP-A1- 2 930 089
- EP-A2- 1 016 584
- DE-A1-102006 001 839
- US-A1- 2014 239 607
- US-B2- 8 322 734

## Description

The invention relates to an axle lift to be mounted to a wheel axle suspension of a vehicle. The wheel axle suspension includes a carrying bracket mounted to a vehicle chassis, a trailing arm attached to an axle body of the wheel axle and having a front end portion with an eyelet which is pivotably mounted to the carrying bracket by a pivot bolt, as well as an air spring which is operative between the chassis and the axle body. The axle lift comprises a lift actuator adapted to lift the wheel axle, a supporting console adapted to be mounted to the carrying bracket and supporting a lower side of the lift actuator underneath the carrying bracket, and a guiding arm. The guiding arm is secured to an upper side of the lift actuator and has a curved end portion adapted to be arranged against a portion of the circumference of the eyelet of the trailing arm to allow a pivoting movement of the guiding arm with respect to the carrying bracket and guiding the movement of the upper side of the actuator. The axle lift furthermore includes a restraining element arranged between the support console and the guiding arm for restraining movement of the guiding arm along the trailing arm,

In many known axle lifts the lift actuator is a pneumatically operated bellows. The upper end of the actuator is usually provided with a (rubber) cushion element which engages an underside of the trailing arm at a distance from the pivot axis of the trailing arm. By pneumatically operating the bellows an upwardly directed force pushes the trailing arm upwardly, whereby it pivots upwardly and the vehicle wheels are lifted of the road surface. In most axle lift arrangements the actuator is arranged at least partly below the carrying bracket. This is to provide space for other suspension parts, such as for example braking cylinders, which might otherwise collide with the axle lift when the trailing arms swivels with respect to its pivot axis. A consequence thereof is that the actuator is arranged with its operative direction in an inclined orientation, such that the lower side of the actuator is located underneath the carrying bracket and the cushion element on the upper side engages the trailing arm rearward from the carrying bracket at a sufficient distance from the pivot axis to be able to lift the axle. A problem with the inclined arrangement of the actuator is that the actuator force is resolved in a vertical component and a horizontal component. The vertical component is effectively used to lift the trailing arm. However, the horizontal force component pushes the cushion element rearwardly along the trailing arm in the longitudinal direction of the trailing arm. Thereby the cushion element tends to slide along the underside of the trailing arm towards the rear. This problem is in particular imminent when the actuator is a bellows, because a bellows cannot absorb significant forces transverse to its operative direction. Furthermore, a bellows mounted in an inclined fashion, when it is pressurized, tends to bulge out towards the rear, which adds up to the already mentioned horizontal force component. Therefore it is known in the art to secure a guiding arm to the upper side of the actuator. The guiding arm is pivoting with respect to the carrying bracket and maintains the upper end of the actuator in position with respect to the trailing arm.

In EP 0 836 984 A1 is disclosed an axle lift with a guiding arm that has on one end eyelets arranged around protruding parts at the outer side of the carrying bracket at the location of the pivot bolt of the wheel axle suspension. These protruding parts may be reinforcement rings welded to the outer sides of the carrying bracket, but may also be formed by a bush arranged around the ends of the pivot bolt extending beyond the lateral plates of the carrying bracket. Because the guiding arm and the trailing arm have the same pivot axis, the cushion element does not tend to shift along the trailing arm too much. Furthermore, the eyelets retain the guiding arm in position and any shifting of the cushion element due to the inclined orientation of the actuator is prevented. A disadvantage is that this known axle lift is relatively complex to retrofit on an existing vehicle suspension, because the eyelets have to be arranged around the protruding parts of the carrying bracket. This requires either a multiple part guiding arm which has to be assembled during fitting the axle lift to the wheel axle suspension, or a guiding arm of resilient material, which allows spreading of the eyelets such that they can be arranged around the protruding parts and spring back. Either way, the assembly of the axle lift on the vehicle suspension is cumbersome.

In another known solution the guiding arm is formed as a plate including a curved end portion. An example thereof is shown in EP 0 941 915 A1, corresponding to the preamble of claim 1. The curved end portion is arranged against the eyelet of the trailing arm as a sort of hook. This arrangement allows that the axle lift can be easily retrofitted to the existing wheel axle suspension, because the curved end portion is simply placed against the outer contour of the eyelet of the trailing arm. By this structure the pivot axis of the trailing arm and the guiding arm coincide or approximately coincide whereby the cushion element mounted on the guiding arm does not tend to shift along the trailing arm too much. However, upon actuation of the actuator, the cushion element tends to shift rearwardly with respect to the trailing arm due to the inclined orientation of the actuator. According to in-house state of the art, this known axle lift includes a spring which is arranged between the guiding arm and the support console of the axle lift. The spring is intended to pull the guiding arm back to its original position, when the actuator is not operated, i.e. the pressure in the bellows is relieved. However, in practice it turned out that after numerous actuation cycles of the axle lift the curved end portion will be "straightened" by the horizontal force component of the actuator. Thereby in the long run the curved end portion of the guiding arm will be pulled out of position and the guiding arm cannot perform its guiding function which eventually results in failure of the axle lift.

The invention has for an object to provide an axle lift that is easily retrofitted to an existing wheel axle suspension, but which obviates the above outlined problems.

This object is achieved by an axle lift to be mounted to a wheel axle suspension of a vehicle. The wheel axle suspension includes a carrying bracket mounted to a vehicle chassis, a trailing arm attached to an axle body of the wheel axle and having a front end portion with an eyelet which is pivotably mounted to the carrying bracket by a pivot bolt, as well as an air spring which is operative between the chassis and the axle body. The axle lift comprises a lift actuator adapted to lift the wheel axle, a supporting console adapted to be mounted to the carrying bracket and supporting a lower side of the lift actuator underneath the carrying bracket, and a guiding arm secured to an upper side of the lift actuator and having a curved end portion adapted to be arranged against a portion of the circumference of the eyelet of the trailing arm to allow a pivoting movement of the guiding arm with respect to the carrying bracket and guiding the movement of the upper side of the actuator. The axle lift furthermore includes at least one restraining element arranged between the support console and the guiding arm for restraining movement of the guiding arm along the trailing arm. The restraining element is a rigid restraining link which has a first end pivotably connected to the supporting console and a second end pivotably connected to the guiding arm.

The rigid restraining link maintains the curved end portion of the guiding arm against the eyelet of the trailing arm.

In a preferred embodiment the restraining link extends upwardly from the first end to the second end. In this embodiment the restraining link supports the curved portion of the guiding arm from below and "pushes" it from below in engagement with the outer surface of the eyelet of the trailing arm when the actuator is operated. Thereby the curved portion is maintained in position against the eyelet and cannot deform under the influence of horizontal forces due to the inclined orientation of the actuator.

In a possible embodiment of the invention the supporting console, the restraining link and the guiding arm form a linkage, which is such that in a retracted state of the actuator, the curved end portion of the guiding arm only engages the eyelet of the trailing arm at a line of contact extending in the transverse direction of the trailing arm. This has the advantage that if the axle lift is inactive, and thus the vehicle wheels are on the road surface, the axle lift components are in minimal contact with the eyelet and other parts of the trailing arm, whereby friction or other loads on the axle lift components due to the dynamic movements of the wheel axle suspension are prevented or at least mitigated.

In a possible embodiment the pivoting connection between the second end of the restraining link and the guiding arm has a pivot axis which in the range between a fully retracted state and a fully extended state of the actuator is situated behind the pivot axis of the trailing arm.

In a possible embodiment the guiding arm is provided with two attachment ears protruding from an underside of said curved end portion and spaced apart in the lateral direction, wherein the second bushing is arranged between the attachment ears and in register with openings in the attachment ears and wherein the second bushing is coupled with the attachment ears by a second pivot pin that extends through the openings in the ears and the second bushing. The attachment ears may be integrally formed on the guiding arm, but they may also be formed separate parts and assembled with the guiding arm, e.g. attached by (spot) welding.

In a possible embodiment the guiding arm is at the curved end portion provided with at least one attachment ear having an opening, the attachment ear protruding from an underside of said curved end portion. The opening in the attachment ear may be an elongate opening. Preferably, the guiding arm is provided with two of said attachment ears which are spaced apart in the lateral direction. The elongate form of the opening of the attachment ear allows the second end of the restraining link to shift in the opening. It was found that the elongate form of the opening in the ear mitigates possible detrimental forces that the ear is subjected to and makes pivoting of the second end of the restraining link in the attachment ear possible when the axle lift is operated to switch between different operational positions of the guiding arm. The lifetime of the axle lift may be extended by this measure.

In a possible embodiment the curved end portion of the guiding arm has a terminal end which is located on a level that lies above the centre axis of the pivot bolt. This assists in maintaining the guiding arm in place when it is subjected to pulling forces by the actuator.

In a possible embodiment the guiding arm is made of sheet metal by bending.

In a further embodiment a longitudinal reinforcing rib is formed in the guiding arm to provide it with the required stiffness. By using a sheet metal part, with reinforcing formations, a relatively lightweight structure of the axle lift can be provided, which is important in the field of transportation vehicles such as trucks and in particular (semi)trailers.

In a possible practical embodiment the restraining link is formed as a first bushing and a second bushing parallel to the first bushing, and a web that interconnects the first and second bushing. Preferably the supporting console has two lateral plates, each with an opening, wherein the first bushing is arranged between said plates and in register with said openings, and wherein the first bushing is coupled with the lateral plates by a pivot pin that extends through the openings and the first bushing. This restraining link may be made of metal, but also a composite material is conceivable.

In possible further embodiments the first pivot pin and/or the second pivot pin is a bolt.

In another possible embodiment the restraining link is formed as a rod, wherein the first end is bent and the second end is bent. This embodiment provides a relatively simple structural member. The restraining rod is preferably made of metal, in particular steel.

In a possible embodiment the axle lift may have two restraining links, each one of the restraining links being pivotably connected to one of the legs of the supporting console.

The two restraining links may be interconnected. For example, if the two restraining links are formed as two restraining rods, one on either legs of the axle lift supporting console, these two restraining rods may also be part of one integrally formed part formed of one rod-shaped blank.

The actuator is preferably a pneumatic bellows. Preferably, the actuator has a centre axis which extends under an angle with respect to the lower surface of the trailing arm, which angle is at least 20°.

The guiding arm at the arm section where it is secured to the actuator is provided with a cushion element, preferably made of rubber, to engage the trailing arm. The cushion provides a protection against damage of the trailing arm by the axle lift.

In a preferred embodiment the axle lift is an assembled unit that is adapted to be retrofitted to an existing wheel axle suspension.

The invention also relates to an air sprung wheel axle suspension of a vehicle including an axle lift according to the invention as described in the above.

The invention will be further elucidated in the following description with reference to the drawing, in which:
Fig. 1 shows a side elevational view of a wheel axle suspension including an axle lift according to the invention in a first operational state,
Fig. 2 shows a side elevational view of the wheel axle suspension of Fig. 1 in a second operational state,
Fig. 3 shows a view in perspective of an embodiment of an axle lift according to the invention fitted on a wheel axle suspension,
Fig. 4 shows a view in perspective partly in a sectional view of the axle lift of Fig. 3, and
Fig. 5A - 5B show schematically a side view of another possible embodiment of an axle lift according to the invention in different states.

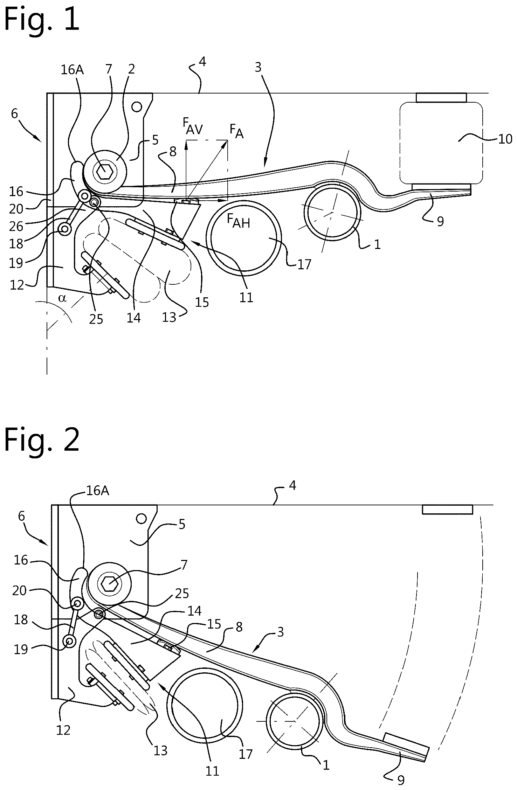

In the Figures 1-4 a part of a wheel axle suspension for a utility vehicle such as a trailer, semi-trailer or a truck is illustrated. Such a wheel axle suspension comprises an axle body 1, in this case a tubular axle body 1 with a circular cross section. In other possible embodiments the axle body may also have another cross section, for example rectangular, which is not shown in the figures. At the ends of the axle body 1, the vehicle wheels and other components can be mounted.

The axle body 1 is suspended from a vehicle chassis 4 by trailing arms 3. In the side view of Fig. 1 there is only one trailing arm 3 visible, but in an air sprung wheel axle suspension, there are generally two substantially parallel trailing arms 3, one at either lateral side of the vehicle chassis 4, which are connected to the axle body 1. The trailing arms 3 extend in the longitudinal direction of the vehicle.

At a front end portion of the trailing arm 3 an eyelet 2 is formed allowing the trailing arm 3 to be pivotally connected by a pivot bolt 7 to a carrying bracket 6 of the vehicle chassis 4. The carrying bracket 6 has generally two lateral plates 5, wherein the eyelet 2 is arranged between said lateral plates 5. At a rear end portion 9 of the trailing arm 3 an air spring 10 may be mounted, which air spring 10 at an upper end thereof supports the vehicle chassis 4. This is all common for the skilled person in the field of sprung wheel axle suspensions and will not be further elaborated here.

The trailing arm 3 in the shown embodiment is a so called flexible trailing arm, which has a spring portion 8 acting as a leaf spring. The spring portion 8 extends rearwardly from the eyelet 2. In general such flexible trailing arms 3 are made of spring steel by means of a rolling process to give the spring portion 8 a parabolic thickness taper toward the front end. Flexible trailing arms can also be made in other ways, such as for example by forging. Also flexible trailing arms made of composite materials are contemplated. The invention however, is not limited to the use of axle lifts with a suspension with flexible trailing arms. Also rigid trailing arms are contemplated.

The wheel axle suspension is provided with an axle lift 11. An axle lift may be mounted to one of the carrying brackets 6 of the wheel axle suspension, but in general there can also be mounted an axle lift to both of the carrying brackets 6.

The axle lift 11 comprises a supporting console 12 and a lifting actuator 13 which is mounted with a lower end to the supporting console 12. The actuator 13 in the shown embodiment is a pneumatic bellows.

The supporting console 12 is mounted to the carrying bracket 6. In the shown embodiment the supporting console 12 has two console arms 26 which extend on an outer side of the lateral plates 5 of the carrying bracket 6, and which are secured thereto by a bolted connection 25. At the front end of the console 12 the console 12 rests against a lower side of the carrying bracket 6. However, also other embodiments in which the supporting console 12 is secured differently to the carrying bracket 6 are envisaged within the scope of the invention, for example hooking structures hooking around protrusions such as the pivot bolt head and tensioning nut or for example a welded connection is possible within the scope of the present invention.

The upper end of the actuator 13 is secured to a guiding arm 14 which is provided with a cushion element 15, preferably made of rubber. The cushion element 15 in use engages the trailing arm 3, as is shown in the figures. The guiding arm 14 has a curved end portion 16 adapted to be arranged against a portion of the circumference of the eyelet 2 of the trailing arm 3 to allow a pivoting movement of the guiding arm 14 with respect to the carrying bracket 6 and guiding the movement of the upper side of the actuator 13. Consequently the upper end of the actuator 13 has approximately the same rotation axis as the trailing arm 3 when the trailing arm 3 is lifted by the actuator 13. Thereby at the engagement area between the cushion element 15 and the trailing arm, the trailing arm 3 and the cushion element 15 make the same rotational movement and thus mutual shifting between the trailing arm 3 and the cushion pad 15 is avoided.

However, like in most axle lift arrangements the actuator 13 in the shown embodiment is arranged at least partly below the carrying bracket 6. This is to provide space for other suspension parts, such as for example a braking cylinder 17 as is schematically indicated in Figs 1 and 2. A consequence thereof is that the actuator 13 is arranged with its operative direction in an inclined orientation indicated by an angle α in Fig.1. The lower side of the actuator 13 is located underneath the carrying bracket 6 and the cushion element 15 on the upper side engages the trailing arm 3 rearward from the carrying bracket 6 at a sufficient distance from the pivot axis to be able to lift the axle 1. The inclined arrangement of the actuator 13 provides that the actuator force F_{A} is resolved in a vertical component F_{A}v and a horizontal component F_{AH}. The vertical component F_{AV} is effectively used to lift the trailing arm 3. However, the horizontal force component F_{AH} pushes the cushion element 15 rearwardly along the underside of the trailing arm 3 in the longitudinal direction of the trailing arm 3. Thereby the cushion element tends 15 to slide along the underside of the trailing arm 3 towards the rear. This problem is in particular imminent when the actuator is a bellows as is shown in the embodiment of the figures, because a bellows cannot absorb significant forces transverse to its operative direction.

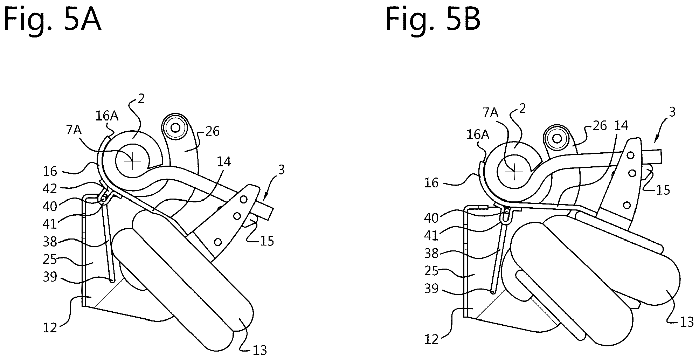

Furthermore, an additional pulling force on the guiding arm 14 is caused by the bellows 13, which, when it is pressurized to the maximum, tends to bulge out towards the rear (cf. Fig. 1 and Fig. 5B). This results in an additional pulling force on the guiding arm 14, which is additional to the already mentioned horizontal force component F_{AH}.

The curved end portion 16 has a terminal end 16A which is preferably located on a level that lies above the centre axis 7A of the pivot bolt 7. This helps to retain the guiding arm 14, that is subjected to pulling forces towards the rear, in place.

However, the curved portion 16 of the guiding arm 14 is in practise not sufficient to keep the guiding arm 14 in place, especially when the guiding arm is formed out of sheet metal. Over time the guiding arm 14 will be displaced rearwardly by the horizontal force component F_{AH} and the curved portion will be forced from under the eyelet 2 of the trailing arm 3. The curved portion 16 may even be deformed and straightened by the actuator 13 that pushes the guiding arm 14 towards the rear.

In order to prevent this from happening the present invention proposes to provide a rigid restraining link 18. The rigid restraining link 18 has a first end 19 that is pivotably connected to the supporting console 12. Furthermore the restraining link 18 has a second end 20 that is pivotably connected to the guiding arm 14. The restraining link 18 extends upwardly from the first end 19 to the second end 20.

The supporting console 12, the restraining link 18 and the guiding arm 14 form a linkage. In an expanded state of the actuator 13 the linkage is such that the curved end portion 16 lies against a part of the circumference of eyelet 2 of the trailing arm 3 as is visible in Fig.1.

In Fig. 2 is visible that the linkage is such that in a retracted state of the actuator 13, the restraining link 18 has a more upright orientation than in the state shown in Fig.1. The curved end portion 16 of the guiding arm 14 only engages the eyelet 2 of the trailing arm 3 at a line of contact extending in the transverse direction of the trailing arm 3. The latter has the advantage that if the axle lift 11 is not activated, and the wheels are thus on the road surface, the guiding arm does not have to follow the dynamic movements of the trailing arm 3 and of the eyelet 2. The vertical forces on the guiding arm 14 are mainly absorbed by the upright or approximately upright restraining link 18.

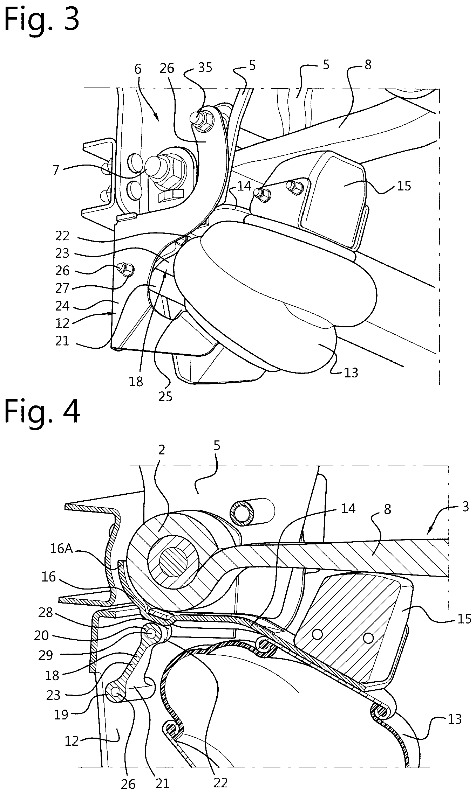

In the embodiment shown in more detail in Figs 3 and 4 the restraining link 18 is formed as a first bushing 21 and a second bushing 22 parallel to the first bushing 21. The restraining link 18 furthermore comprises a web 23 that interconnects the first and second bushings 21, 22. The supporting console 12 has two lateral plates 24, 25, each with an opening. The first bushing 21 is arranged between said plates 24, 25 and in register with said openings. The first bushing 21 is coupled with the lateral plates by a pivot pin 26 that extends through the openings and the first bushing 21. In the particular embodiment shown the pivot pin 26 is a bolt, which is fixed with a nut 27.

The guiding arm 14 is provided with two attachment ears 28 protruding from an underside of the curved end portion 16 of the guiding arm 14. The ears 28 are spaced apart in the lateral direction. The second bushing 22 is arranged between the attachment ears 28 and in register with openings in the attachment ears 28. The second bushing 22 is coupled with the attachment ears 28 by a second pivot pin 29 that extends through the openings in the ears 28 and through the second bushing 22.

In Figs 5A - 5B another embodiment of an axle lift according to the invention is shown. However, the same features are indicated with the same reference numerals as in the above embodiments. The main difference lies in how the restraining link is embodied.

In the embodiment of Fig. 5 the restraining link is indicated by reference numeral 38. The restraining link 38 is in this embodiment formed as a rod with end portions bent in a lateral direction. The first end 39 of the rod is bent outwardly and is inserted in a hole in the lateral plate 24, 25 of the supporting console 12.

The second end 40 of the rod 38 is inserted through an attachment ear 41 that is provided on an underside of the curved portion 16 of the guiding arm 14. The attachment ear 41 is in this embodiment formed as a loop attached, e.g. welded to the underside of the curved portion 16 of the guiding arm 14. The opening 42 formed by the loop has an elongate shape. The second end 40 of the restraining link 38 is allowed to pivot and to shift in the elongate opening 42.

In Fig. 5A is shown a state of the axle lift wherein the pneumatic actuator 13 is in the uninflated state. In this state the restraining link 38 is in an upright position, a little inclined towards the front, i.e. the movable end 40 is situated in front of the stationary end 39.
In Fig. 5B is shown a state in which the pneumatic actuator 13 is pressurized. The inflation of the bellows 13 pushes the guiding arm 14 upwardly. The curved portion 16 of the guiding arm 14 engages a part of the circumference of the eyelet 2 of the trailing arm 3. By the movement of the guiding arm 14, the end 40 of the restraining rod 38 is moved to the other end of the elongate opening in the attachment ear 41.

The trailing arm 3 will be lifted as is shown in Fig. 5B. The restraining link 38 adopts an inclined orientation towards the rear than in the less inflated state of the bellows 13 shown in Figs 5A.

## Claims

1. Axle lift (11) to be mounted to a wheel axle suspension of a vehicle,
the wheel axle suspension including a carrying bracket (6) mounted to a vehicle chassis (4), a trailing arm (3) attached to an axle body (1) of the wheel axle and having a front end portion with an eyelet (2) which is pivotably mounted to the carrying bracket (6) by a pivot bolt (7), as well as an air spring (10) which is operative between the chassis (4) and the axle body (1), the axle lift (11) comprising a lift actuator (13) adapted to lift the wheel axle, a supporting console (12) adapted to be mounted to the carrying bracket (6) and supporting a lower side of the lift actuator (13) underneath the carrying bracket (6), and a guiding arm (14) secured to an upper side of the lift actuator (13) and having a curved end portion (16) adapted to be arranged against a portion of the circumference of the eyelet (2) of the trailing arm (3) to allow a pivoting movement of the guiding arm (14) with respect to the carrying bracket (6) and guiding the movement of the upper side of the actuator (13),
**characterized in that** the axle lift (11) furthermore includes at least one restraining element arranged between the supporting console (12) and the guiding arm (14) for restraining movement of the guiding arm (14) along the trailing arm (3),
wherein the restraining element is a rigid restraining link (18; 38) which has a first end (19; 39) pivotably connected to the supporting console (12) and a second end (20; 40) pivotably connected to the guiding arm (14).

2. Axle lift according to claim 1, wherein the supporting console (12), the restraining link (18; 38) and the guiding arm (14) form a linkage, which is such that in a retracted state of the actuator (13), the curved end portion (16) of the guiding arm (14) only engages the eyelet (2) of the trailing arm (3) at a line of contact extending in the transverse direction of the trailing arm (3).

3. Axle lift according to claim 1 or 2, wherein the restraining link (18; 38) extends upwardly from the first end (19; 39) to the second end (20; 40).

4. Axle lift according to any of the preceding claims, wherein the pivoting connection between the second end (20; 40) of the restraining link (18; 38) and the guiding arm (14) has a pivot axis which in the range between a fully retracted state and a fully extended state of the actuator (13) is situated behind the pivot axis (7A) of the trailing arm (3).

5. Axle lift according to any of the preceding claims, wherein the guiding arm (14) is at the curved end portion provided with at least one attachment ear (41) having an opening (42), preferably an elongate opening (42), the attachment ear (41) protruding from an underside of said curved end portion (16).

6. Axle lift according to claim 5, wherein the guiding arm (14) is provided with two of said attachment ears (41) which are spaced apart in the lateral direction.

7. Axle lift according to any of the preceding claims, wherein the curved end portion (16) of the guiding arm (14) has a terminal end (16A) which is located on a level that lies above the centre axis (7A) of the pivot bolt (7).

8. Axle lift according to any of the preceding claims, wherein the guiding arm (14) is made of sheet metal by bending, wherein, preferably, a longitudinal reinforcing rib is formed in the guiding arm (14).

9. Axle lift according to any of the preceding claims, wherein the restraining link (18) is formed as a first bushing (21) and a second bushing (22) parallel to the first bushing (21), and a web (23) that interconnects the first (21) and second bushing (22).

10. Axle lift according to claim 9, wherein the supporting console (12) has two lateral plates (24, 25), each with an opening, wherein the first bushing (21) is arranged between said plates (24, 25) and in register with said openings, and wherein the first bushing (21) is coupled with the lateral plates (24, 25) by a pivot pin (26) that extends through the openings and the first bushing (21).

11. Axle lift according to claim 9 or 10, wherein the guiding arm is provided with two attachment ears (28) protruding from an underside of said curved end portion (16) and spaced apart in the lateral direction, wherein the second bushing (22) is arranged between the attachment ears (28) and in register with openings in the attachment ears (28) and wherein the second bushing (22) is coupled with the attachment ears (28) by a second pivot pin (29) that extends through the openings in the attachment ears (28) and the second bushing (22).

12. Axle lift according to claim 11, wherein the first pivot pin (26) and/or the second pivot pin (29) is a bolt.

13. Axle lift according to any of the claims 1-8, wherein the restraining link (38) is formed as a rod, wherein the first end (39) is bent and the second end (40) is bent.

14. Axle lift according to any of the preceding claims, having one or more of the following features:
- the axle lift has two restraining links (38), each one of the restraining links (38) being pivotably connected to one of the legs of the supporting console (12);
- the actuator (13) is a pneumatic bellows, wherein, preferably the actuator (13) has a centre axis which extends under an angle with respect to the lower surface of the trailing arm (3), which angle is at least 20°;
- the guiding arm (14) at the arm section where it is secured to the actuator is provided with a cushion element (15), preferably made of rubber, to engage the trailing arm (3);
- the axle lift (11) is an assembled unit that is adapted to be retrofitted to an existing wheel axle suspension.

15. Air sprung wheel axle suspension of a vehicle provided with an axle lift (11) according to any of the preceding claims.

## Patentansprüche

1. Achsanhebung (11), die an einer Radachsaufhängung eines Fahrzeugs zu montieren ist,
wobei die Radachsaufhängung einen Trägerblock (6), der an einem Fahrzeugchassis (4) montiert ist, ein Achslenker (3), die an einem Achskörper (1) der Radachse montiert ist und einen vorderen Endabschnitt mit einer Öse (2) aufweist, die schwenkbar an dem Trägerblock (6) durch einen Schwenkbolzen (7) montiert ist, sowie eine Luftfeder (10) umfasst, die zwischen dem Chassis (4) und dem Achskörper (1) betriebsfähig ist, wobei die Achsanhebung (11) ein Anhebungsaktuator (13), das angepasst ist, die Radachse anzuheben, eine Stützkonsole (12), die angepasst ist, an dem Trägerblock (6) montiert zu werden, und eine untere Seite des Anhebungsaktuators (13) unterhalb des Trägerblocks (6) stützt, und eine Führungsstrebe (14) umfasst, die an einer oberen Seite des Anhebungsaktuators (13) gesichert ist und einen gekrümmten Endabschnitt (16) aufweist, der angepasst ist, gegen einen Abschnitt des Umfangs der Öse (2) des Achslenkers (3) angeordnet zu sein, um eine Schwenkbewegung der Führungsstrebe (14) in Bezug auf den Trägerblock (6) und ein Führen der Bewegung der oberen Seite des Aktuators (13) zu erlauben,
**dadurch gekennzeichnet, dass**
die Achsanhebung (11) darüber hinaus mindestens ein Begrenzungselement umfasst, das zwischen der Stützkonsole (12) und der Führungsstrebe (14) angeordnet ist, um eine Bewegung der Führungsstrebe (14) entlang des Achslenkers (3) zu begrenzen,
wobei das Begrenzungselement ein starres Begrenzungsglied (18; 38) ist, das ein erstes Ende (19; 39) schwenkbar mit der Stützkonsole (12) verbunden und ein zweites Ende (20; 40) schwenkbar mit der Führungsstrebe (14) verbunden aufweist.

2. Achsanhebung nach Anspruch 1, wobei die Stützkonsole (12), das Begrenzungsglied (18; 38) und die Führungsstrebe (14) ein Gestänge bilden, das so ist, dass in einem eingezogenen Zustand des Aktuators (13) der gekrümmte Endabschnitt (16) der Führungsstrebe (14) nur mit der Öse (2) des Achslenkers (3) bei einer Kontaktlinie eingreift, die sich in der Querrichtung des Achslenkers (3) erstreckt.

3. Achsanhebung nach Anspruch 1 oder 2, wobei das Begrenzungsglied (18; 38) sich von dem ersten Ende (19; 39) zu dem zweiten Ende (20; 40) nach oben erstreckt.

4. Achsanhebung nach einem der vorstehenden Ansprüche, wobei die Schwenkverbindung zwischen dem zweiten Ende (20; 40) des Begrenzungsgliedes (18; 38) und der Führungsstrebe (14) eine Schwenkachse aufweist, die in dem Bereich zwischen einem vollständig eingezogenen Zustand und einem vollständig ausgerückten Zustand des Aktuators (13) hinter der Schwenkachse (7A) des Achslenkers (3) liegt.

5. Achsanhebung nach einem der vorstehenden Ansprüche, wobei die Führungsstrebe (14) sich bei dem gekrümmten Endabschnitt befindet, der mit mindestens einem Befestigungsohr (41) bereitgestellt ist, das eine Öffnung (42), bevorzugt eine längliche Öffnung (42), aufweist, wobei das Befestigungsohr (41) von einer Unterseite des gekrümmten Endabschnitts (16) vorragt.

6. Achsanhebung nach Anspruch 5, wobei die Führungsstrebe (14) mit zwei der Befestigungsohren (41) bereitgestellt ist, die in der Querrichtung beabstandet sind.

7. Achsanhebung nach einem der vorstehenden Ansprüche, wobei der gekrümmte Endabschnitt (16) der Führungsstrebe (14) ein Anschlussende (16A) aufweist, das auf einer Ebene gelegen ist, die über der Mittelachse (7A) des Schwenkbolzens (7) liegt.

8. Achsanhebung nach einem der vorstehenden Ansprüche, wobei die Führungsstrebe (14) durch Biegen aus Blech hergestellt ist, wobei bevorzugt eine längliche Verstärkungsrippe in der Führungsstrebe (14) gebildet ist.

9. Achsanhebung nach einem der vorstehenden Ansprüche, wobei das Begrenzungsglied (18) als eine erste Muffe (21) und eine zweite Muffe (22) parallel zu der ersten Muffe (21) und ein Steg (23), der die erste (21) und zweite Muffe (22) zwischenverbindet, gebildet ist.

10. Achsanhebung nach Anspruch 9, wobei die Stützkonsole (12) zwei seitliche Platten (24, 25) aufweist, wobei jede eine Öffnung aufweist, wobei die erste Muffe (21) zwischen den Platten (24, 25) und in Ausrichtung mit den Öffnungen angeordnet ist und wobei die erste Muffe (21) mit den seitlichen Platten (24, 25) durch einen Schwenkstift (26) gekoppelt ist, der sich durch die Öffnungen und die erste Muffe (21) erstreckt.

11. Achsanhebung nach Anspruch 9 oder 10, wobei die Führungsstrebe mit zwei Befestigungsohren (28) bereitgestellt ist, die von einer Unterseite des gekrümmten Endabschnitts (16) vorragen und in der seitlichen Richtung beabstandet sind, wobei die zweite Muffe (22) zwischen den Befestigungsohren (28) und in Ausrichtung mit Öffnungen in den Befestigungsohren (28) bereitgestellt ist und wobei die zweite Muffe (22) mit den Befestigungsohren (28) durch einen zweiten Schwenkstift (29) gekoppelt ist, der sich durch die Öffnungen in den Befestigungsohren (28) und die zweite Muffe (22) erstreckt.

12. Achsanhebung nach Anspruch 11, wobei der erste Schwenkstift (26) und/oder der zweite Schwenkstift (29) ein Bolzen ist.

13. Achsanhebung nach einem der Ansprüche 1-8, wobei das Begrenzungsglied (38) als eine Stange gebildet ist, wobei das erste Ende (39) gebogen ist und das zweite Ende (40) gebogen ist.

14. Achsanhebung nach einem der vorstehenden Ansprüche, die ein oder mehrere der folgenden Merkmale aufweist:
- die Achsanhebung weist zwei Begrenzungsglieder (38) auf, wobei jede der Begrenzungsglieder (38) schwenkbar mit einem der Schenkel der Stützkonsole (12) verbunden ist;
- der Aktuator (13) ist ein pneumatischer Balg, wobei bevorzugt der Aktuator (13) eine Mittelachse aufweist, die sich unter einem Winkel in Bezug auf die untere Fläche des Achslenkers (3) erstreckt, wobei der Winkel mindestens 20° ist;
- die Führungsstrebe (14) ist bei dem Strebenteil, wo sie an dem Aktuator gesichert ist, mit einem Dämpfungselement (15) bereitgestellt, das bevorzugt aus Gummi gemacht ist, um mit dem Achslenker (3) einzugreifen;
- die Achsenanhebung (11) ist eine zusammengesetzte Einheit, die angepasst ist, an einer bestehenden Radachsaufhängung nachgerüstet zu werden.

15. Luftgefederte Radachsaufhängung eines Fahrzeugs, das mit einer Achsanhebung (11) nach einem der vorstehenden Ansprüche bereitgestellt ist.

## Revendications

1. Elévateur d'essieu (11) destiné à être monté sur une suspension d'essieu d'une roue d'un véhicule, la suspension d'essieu de roue comprenant un support de transport (6) monté sur un châssis de véhicule (4), un bras oscillant (3) fixé à un corps d'essieu (1) d'essieu de roue et ayant une partie d'extrémité avant avec un œillet (2) monté de manière pivotante sur le support de transport (6) par un boulon de pivot (7), ainsi qu'un ressort pneumatique (10) qui fonctionne entre le châssis (4) et le corps d'essieu (1), l'élévateur d'essieu (11) comprenant un actionneur de levage (13) adapté pour soulever l'essieu de roue, une console de support (12) adaptée pour être montée sur le support de transport (6) et supporter un côté inférieur de l'actionneur de levage (13) sous le support de transport (6), et un bras de guidage (14) fixé à un côté supérieur de l'actionneur de levage (13) et ayant une partie d'extrémité incurvée (16) adaptée pour être agencée contre une partie de la circonférence de l'œillet (2) du bras oscillant (3) pour permettre un mouvement de pivotement du bras de guidage (14) par rapport au support de transport (6) et guidant le mouvement du côté supérieur de l'actionneur (13),
**caractérisé en ce que**
l'élévateur d'essieu (11) comprend en outre au moins un élément de retenue disposé entre la console de support (12) et le bras de guidage (14) pour restreindre le mouvement du bras de guidage (14) le long du bras oscillant (3),
dans lequel
l'élément de retenue est une liaison de retenue rigide (18; 38) qui a une première extrémité (19; 39) reliée de manière pivotante à la console de support (12) et une seconde extrémité (20; 40) reliée de manière pivotante au bras de guidage (14).

2. Elévateur d'essieu selon la revendication 1, dans lequel la console de support (12), la liaison de retenue (18; 38) et le bras de guidage (14) forment une liaison, qui est telle qu'à l'état rétracté de l'actionneur (13), la partie d'extrémité incurvée (16) du bras de guidage (14) n'engage l'œillet (2) du bras oscillant (3) que sur une ligne de contact s'étendant dans la direction transversale du bras oscillant (3).

3. Elévateur d'essieu selon la revendication 1 ou 2, dans lequel la liaison de retenue (18; 38) s'étend vers le haut depuis la première extrémité (19; 39) jusqu'à la seconde extrémité (20; 40) .

4. Elévateur d'essieu selon l'une quelconque des revendications précédentes, dans lequel la liaison pivotante entre la seconde extrémité (20; 40) de la liaison de retenue (18; 38) et le bras de guidage (14) a un axe de pivot qui dans la plage comprise entre un état complètement rétracté et un état complètement déployé de l'actionneur (13) est situé derrière l'axe de pivotement (7A) du bras oscillant (3).

5. Elévateur d'essieu selon l'une quelconque des revendications précédentes, dans lequel le bras de guidage (14) est au niveau de la partie d'extrémité incurvée pourvue d'au moins une oreille de fixation (41) ayant une ouverture (42), de préférence une ouverture allongée (42), l'oreille de fixation (41) dépassant d'un côté inférieur de ladite partie d'extrémité incurvée (16).

6. Elévateur d'essieu selon la revendication 5, dans lequel le bras de guidage (14) est pourvu de deux desdites oreilles de fixation (41) qui sont espacées dans la direction latérale.

7. Elévateur d'essieu selon l'une quelconque des revendications précédentes, dans lequel la partie d'extrémité incurvée (16) du bras de guidage (14) a une extrémité terminale (16A) qui est située à un niveau qui se trouve au-dessus de l'axe central (7A) du boulon de pivot (7).

8. Elévateur d'essieu selon l'une quelconque des revendications précédentes, dans lequel le bras de guidage (14) est une plaque de tôle pliée, dans lequel, de préférence, une nervure de renforcement longitudinale est formée dans le bras de guidage (14) .

9. Elévateur d'essieu selon l'une quelconque des revendications précédentes, dans lequel la liaison de retenue (18) est formée comme une première douille (21) et une seconde douille (22) parallèles à la première douille (21), et un manche (23) qui interconnecte la première douille (21) et la seconde douille (22) .

10. Elévateur d'essieu selon la revendication 9, dans lequel la console de support (12) a deux plaques latérales (24, 25), chacune avec une ouverture, dans lequel la première douille (21) est disposée entre lesdites plaques (24, 25) en vis-à-vis desdites ouvertures, et dans lequel la première douille (21) est couplée aux plaques latérales (24, 25) par un axe de pivotement (26) qui s'étend à travers les ouvertures et la première douille (21) .

11. Elévateur d'essieu selon la revendication 9 ou 10, dans lequel le bras de guidage est pourvu de deux oreilles de fixation (28) faisant saillie depuis une face inférieure de ladite partie d'extrémité incurvée (16) et espacées dans la direction latérale, dans laquelle la seconde douille (22) est disposée entre les oreilles de fixation (28) et en vis-à-vis des ouvertures dans les oreilles de fixation (28) et dans lequel la seconde douille (22) est couplée aux oreilles de fixation (28) par un second axe de pivotement (29) qui s'étend à travers les ouvertures dans les oreilles de fixation (28) et la seconde douille (22).

12. Elévateur d'essieu selon la revendication 11, dans lequel le premier axe de pivotement (26) et/ou le second axe de pivotement (29) est un boulon.

13. Elévateur d'essieu selon l'une quelconque des revendications 1 à 8, dans lequel la liaison de retenue (38) est formée d'une tige, dans lequel la première extrémité (39) est courbée et la seconde extrémité (40) est courbée.

14. Elévateur d'essieu selon l'une quelconque des revendications précédentes, ayant une ou plusieurs des caractéristiques suivantes:
- l'élévateur d'essieu a deux liaisons de retenue (38), chacune des liaisons de retenue (38) étant reliée de manière pivotante à l'une des jambes de la console de support (12);
- l'actionneur (13) est un soufflet pneumatique, dans lequel, de préférence l'actionneur (13) a un axe central qui s'étend selon un angle par rapport à la surface inférieure du bras oscillant (3), cet angle étant d'au moins 20 °;
- le bras de guidage (14) dans la section de bras où il est fixé à l'actionneur est pourvu d'un élément d'amortissement (15), de préférence en caoutchouc, pour engager le bras oscillant (3);
- l'élévateur d'essieu (11) est une unité assemblée qui est adaptée pour être installée ultérieurement sur une suspension d'essieu de roue existante.

15. Suspension pneumatique d'essieu de roue d'un véhicule équipée d'un élévateur d'essieu (11) selon l'une quelconque des revendications précédentes.
